(19) **Europäisches Patentamt**
**European Patent Office**
**Office européen des brevets**

(11) **EP 4 644 688 A1**

(12) **EUROPEAN PATENT APPLICATION**

(43) Date of publication:
**05.11.2025 Bulletin 2025/45**

(21) Application number: **25173761.5**

(22) Date of filing: **30.04.2025**

(51) International Patent Classification (IPC):
**F03B 13/06** $^{(2006.01)}$

(52) Cooperative Patent Classification (CPC):
**F03B 13/06;** F05B 2210/10; F05B 2210/13

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.05.2024 US 202463641297 P**

(71) Applicant: **Parker, Dennis C
Victor ID 83455 (US)**

(72) Inventor: **Parker, Dennis C
Victor ID 83455 (US)**

(74) Representative: **ABG Intellectual Property Law,
S.L.
Avenida de Burgos, 16D
Edificio Euromor
28036 Madrid (ES)**

(54) **ENERGY STORAGE SYSTEM FOR USE WITH RENEWABLE ENERGY SOURCES**

(57) Renewable energy sources such as solar power and wind power are intermittent and variable. It is desirable to store energy produced by these systems so it can be utilized when these sources are not producing. The battery system combines the force of gravity with high density water to generate electricity in a turbine. The water is stored at surface level and returned to the elevated storage site when renewable energy is available to pump it to the storage facility. The density of the water can be increased with the use of soluble and insoluble ground minerals using suspending agents and surfactants. These batteries can operate independently to generate AC current for supporting grid demand or can generate DC current for specific applications like regenerating chemical batteries used in transportation devices such as automobiles and trucks.

Fig. 1A

EP 4 644 688 A1

Fig. 1B

## Description

### Field

A system stores electrical energy by using readily available resources such as gravity, water, ground minerals, suspending agents, chemical dispersing agents, and/or optional additives, mixing equipment to mix ingredients, elevated storage such as a water tower, turbine generator to generate AC or DC current and pumps to return mineral suspension to elevated storage thus recharging the battery.

### Background

Renewable energy resources have been used by man for over a century to generate electricity. Hydroelectric dams still generate a substantial amount of the world's electricity however they require that free flowing rivers be dammed to generate sufficient head pressure to run turbine generators. Damming rivers has a heavy impact on the environment for wildlife, fish, and humans depriving them of valuable resources.

Industrialization and modern convenience placed heavy demands for electrical power. Fossil fuels such as coal, oil, natural gas were used to generate electricity at higher volumes and voltages. Human society became dependent on a supply of low cost electrical energy for industrial production and home/consumer use. This dependence drove demand for mining coal, drilling for oil and gas. Global supply systems which consumed fossil fuels transported these materials to generator stations where they converted hydrocarbon energy to electrical energy.

The mining of coal and the production of oil and gas may damage the environment in a wide variety of seen and unseen ways. Huge volumes of coal are surface mined leaving millions of acres of disturbed ground. The waste piles of overburden from coal mines pollute creeks and rivers with acid runoff. The environmental impact of producing fossil fuels can be seen with the human eye.

It is the unseen impact of burning fossil fuels which impacts human and animal life. Burning fossil fuels creates greenhouse gases which can raise the global temperature. The combustion gases can contain acid forming substances that damage forests and crop production. The production and storage of coal combustion is ash which must be stored on site. The storage of waste ash presents environmental risks for thousands of years due to potential ground water and surface water contamination.

Transportation systems produce millions of tons of greenhouse gases on a daily basis by burning gasoline and diesel fuel in internal combustion engines. The hydrocarbon refining systems add additional tons of greenhouse gases to produce the fuels. Man made green house gases are contributing to the increase of global temperatures which are melting glaciers and the polar ice cap.

To lessen and eventually halt this continued destruction of the environment, people around the world have demanded action to increase the use of renewable sources of energy. Renewable energy is available at a much lower environmental impact than energy generated by fossil fuel sources. Increasing the use of renewable energy requires large energy storage capacity to lower its cost and to increase its viability to replace fossil fuels. Large storage capacity must be built prior to the expansion of renewable resources so renewable resources can reach their full potential.

Solar and wind energy are the two most available sources of energy. They are variable in that the sun shines 12 hours or less in a given day leaving 12 hours where stored energy must be used. Wind energy is intermittent with peaks and valleys of energy generation that does not coincide with demands for electricity.

The current method to store and supplement wind and solar energy is by using chemical batteries such as lithium and sodium batteries. Both systems need electrical energy from the grid to recharge their systems. Lithium batteries are subject to explosion and run-away thermal events which are nearly impossible to extinguish with conventional methods. Sodium-ion batteries are considered safer, they are not completely without risks. Like any energy storage system, there is still a potential for thermal issues, short circuits, or other malfunctions that could lead to overheating. However, the risk of explosion is generally lower compared to lithium-ion batteries. Placing these batteries in high density urban environments carry significant risks to the local population. Placing them in rural or isolated areas would require significant resources to combat potential fires and explosions.

The creation of high density batteries which have no environmental impact and can be organized in a manner to meet the demands of the renewable energy system is highly desirable and will allow renewable energy to become the norm instead of the exception. Increasing storage capacity of electricity will facilitate the use of renewable energy.

It is accordingly a primary object of the invention to store electrical energy by readily available resources.

This is achieved by embodiments of this description.

### Summary

In accordance with the invention, a method of generating electricity, in particular using an energy storage system for use with renewable and non-renewable energy sources. Aspects of the invention include flowing fuel into a power generator to generate electrical power, and directly or indirectly transferring the generated power to one or more loads. The fuel comprises an aqueous suspension of solid particulates in an aqueous liquid (i.e. comprising water). The method makes it possible to generate electricity without a chemical reaction of the aqueous suspension of solid particulates in an aqueous liquid. Optionally, the solid particulates have a specific gravity ranging from $0.9\,g/cm^3$ to $6\,g/cm^3$, or from $1.9\,g/cm^3$ to $6.0\,g/cm^3$ or from $2.5\,g/cm^3$ to $5.5\,g/cm^3$ or from $3.4\,g/cm^3$ to $4.8\,g/cm^3$.

Aspects of the invention include the aqueous suspension of the solid particulates comprising solid particulates in the aqueous liquid in the presence of at least one suspending agent, especially at least one mineral suspending agent, and optionally at least one additive in a dispersed and a liquid phase. Optionally, when present, the at least one suspending agent is present in an amount ranging from 0.025% to 0.125 % by weight relative to the total weight of the at least one suspending agent and the solid particulates, especially, the amount being from 0.028% to 0.113 or 0.030% to 0.100% or 0.033% to 0.092% or 0.085 % to 0.036%. Optionally, when present, the at least one additive is present in an amount ranging from 0.01% to 6.0 % by weight relative to the total weight of the at least one additive, the at least one suspending agent and the solid particulates, especially, the amount being from 0.05% to 4.0 % or from 0.1 % to 3.5%.

Aspects of the invention the aqueous liquid being water; the aqueous liquid comprising water and at least one other liquid; water being present in an amount greater than 50% v/v relative to the total volume of the water plus the volume of the at least one other liquid, such as the amount being greater than 60% v/v or 70% v/v or 96% v/v or 99%v/v or the amount ranges from 75% to 95%v/v or from 80% to 90% v/v; and optionally at least one other solid substance being present in the aqueous liquid, such as, the at least one other solid substance is miscible in a component of the aqueous liquid phase, e.g., water, or the at least one other solid substance is immiscible in a component of the aqueous liquid phase, e.g., the at least one other solid substance is in the source of water or is added in a process of gathering the solid particulates.

Aspects of the invention include the at least one other liquid being an organic liquid, such as an organic liquid chosen from the group consisting of silicones, hydrocarbons, alcohols and mixtures thereof, for example, the at least one other the organic liquid chosen from the group consisting of a glycol, a silicone, and mixtures thereof; or the at least one other liquid being miscible with water or at least partially miscible with water.

Aspects of the invention include the water being from sources of fresh water or sources of saline water, such as brackish or brine, including a source chosen from the group consisting of brine ponds, sea water, ocean water, lakes, ponds, municipal water, tap water, ground water, and mixtures thereof.

Aspects include the solid particulates being are present in the amount ranging from 5% to 95% by weight of solid particulates relative to the total weight of the aqueous liquid plus the dry weight of the solid particulates (%w/w), for example, wherein the solid particulates are present in an amount ranging from 10% to 90% w/w by weight of solid particulates relative to the total weight of the water plus the dry weight of the solid particulates, for example, the amount ranges from 20% to 85% w/w, 15% to 80%w/w or from 20% to 70% w/w or from or 25% to 60% w/w.

Aspects include the solid particulates comprising at least one mineral suspending agents such as attapulgite, sepiolite, palygorskite, bentonite, smectites, such as montmorillonite clay minerals, for example, illite, hectorite and saponite nontronite, and beidellite; iron ore; combinations thereof, and especially attapulgite that is substantially free of non- attapulgite minerals and iron ore.

Aspects include the power generator being stationary or portable; chosen from stationary or portable hydroelectric power generators, such as portable hydroelectric power generators, optionally mounted on a vehicle, such as a vehicle (for example a tow truck) used to service other vehicles (including electric vehicles, such as those in which the electric vehicles' batteries have a power stored at an amount less than 90%, 80%, 70%, 60%, 50%, 40%, 30%, 20%, 10%, 5%, or 1% of the electric vehicles' batteries' storage capacities); and combinations thereof.

Aspects of the invention include the one or more loads being chosen from batteries, such as batteries in vehicles, including batteries in electric-vehicles, including batteries in electric cars, batteries in homes, including batteries for appliances (such as large scale computer storage facilities), buildings, including batteries for storing power for peak use or grid outages, inverters for converting alternating current to direct current and vise versa, alternators for generating alternating current, transformers, and combinations thereof, optionally in which the one or more loads being connected to a power grid, a power distribution network, such as residential (including a single residence), commercial (including a single commercial structure such as a building), transmission lines, or combinations thereof.

Aspect of the invention further comprise, before flowing, storing the aqueous suspension of solid particulates in which one or more portable or stationary containers for supplying the fuel to the power generator to generate electric power.

Aspects of the invention include the one or more containers having a capacity for 200 to 2,000,000 gallons (757.082 to 7,570,824 L). The lower end of the range is 200, 500, 1,000 5,000 or 10,000 gallons (757.082; 1,892.705; 3,785.41; 18,927.05; or 37,854.1 L). The upper end of the range is 50,000, 100,000, 200,000, 500,000, 1,000,000, 1,500,000, or 2,000,000 gallons (189,270.5; 378,541; 757,082; 1,892,705; 3,785,410; 5,678,115; or 7,570,820 L). Any combination of lower and upper end of the range is possible. Aspects of the invention include the one or more containers being open (to, for example, air) containers or closed containers, (for example, gas pressurizible, e.g., air compressor, to allow gas (like air) to occupy part of the closed containers to thereby facilitate the flowing or being for municipal, industrial, residential, commercial, agricultural purposes or combinations of purposes thereof, such as towers, vats, (complete when discussing); or being for commercial purposes, optionally mounted on a vehicle, such as a vehicle (for example a tow truck) used to service other vehicles (including electric vehicles, such as those in which the electric vehicles' batteries have a power stored at an amount less than 90%, 80%, 70%, 60%, 50%, 40%, 30%, 20%, 10%, 5%, or 1% of the electric vehicles' batteries' storage capacities); or combinations thereof (and or having any capacity).

Aspects include the flowing being aided by or results from one or more of the following: gravity; pressure, such as gas pressure above the aqueous suspension of solid particulates in a closed container; pumps, such as positive displacement pumps or piston pumps; and combinations thereof. Aspects include containers configured with alternative energy sources, including, e.g., a solar panel or wind mill associated with an electric generator for the alternative energy source.

Aspects of the invention include the power generating being for one or more of the following: residential alternating current outlet charging, such as 110 v, 220v or 440 v or combinations thereof; direct current fast charging (DCFC) such as along corridors optionally at stationary stations, private or public locations, including stores (grocery, goods, services, etc.), theaters, coffee shops, and combinations thereof; such as along highways and roads optionally via battery towers for DCFC of communities or electric vehicles' batteries; such as for peak use for communities for easing peak use of power on the power source, such as the grid; such as in tandem with other renewable power sources, such as solar, wind, gas, coal, or nuclear power sources.

The system can be configured to generate alternating current to distribute into the electrical grid when renewable resources are insufficient, undesirable, or unavailable, such as nighttime and there is no solar power or during times when wind energy is insufficient or not available to power wind turbines.

The system can be configured to generate DC current to charge, for example, automobiles and trucks more efficiently than charging from the grid with AC power, for example, when the conversion from AC to DC results in up to a 30% loss of electrical energy.

The system can be configured to recharge simultaneously while being discharged. For example, pumps can be driven with AC current or stored air pressure to recharge the battery while the turbine generator generates DC or AC current for industrial use such as recharging large numbers (fleets) of electrical vehicles, computer facilities, etc. The renewable energy grid system cannot meet this demand consistently. "

The system can be configured to be deployed in densely populated areas with minimal to no risk of fire or explosion. The minerals and chemicals used are relatively non-toxic and can be purposed to other applications when replaced. Building in local communities, commercial and industrial facilities will allow the elimination of long distance transmission losses which are currently associated with grid electrical power. Increasing the percentage of sustainable, locally generated clean energy.

Multiple systems can be used to balance grid power and maintain balance of the electrical system with or without a need to call on fossil fuel sources to make up the difference in electrical load demand.

The system can be in or part of a building or other structure, or transportable on a vehicle to a remote location.

Additional aspects, as well as objects and advantages, of the invention will be set forth in part in the description which follows, and in part will be obvious from the description, or may be learned by practice of the invention. The aspects, objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

The accompanying drawings, which are incorporated in and constitute a part of this specification, illustrate one (several) embodiment(s) of the invention and together with the description, serve to explain the principles of the invention.

## Brief Description Of The Drawings

Figures 1A-B are schematic representations of a system and methods disclosed herein.
Figure 2 is a schematic of time shift of solar power.
Figure 3 is a schematic of time output of wind power.

## Description Of Embodiments

Reference will now be made in detail to exemplary embodiments of the invention, examples of which are illustrated in the accompanying description or drawings. Wherever possible, the same reference numbers will be used throughout the drawings to refer to the same or like parts.

A system comprises fuel, configured to flow into a power generator to generate electricity, which is usable to power a load, including resistive, capacitive, and inductive loads.

A method generates electricity, in particular using an energy storage system for use with renewable and non-renewable energy sources. Fuel is flowed fuel into a power generator to generate electrical power. The generated power is directly or indirectly transferred to one or more loads. The fuel comprises an aqueous suspension of solid particulates in an aqueous liquid.

### an aqueous suspension of solid particulates in an aqueous liquid

The aqueous suspension of the solid particulates comprises solid particulates in the aqueous liquid (i.e. comprising water) optionally in the presence of at least one mineral suspending agent and/or optionally, in the dispersed and/or liquid phase, at least one dispersing agent, and/or optionally, in the dispersed and/or liquid phase, at least one additive in the dispersed and/or liquid phase.

As used herein, a suspension is an aqueous liquid in which solid particulates are dispersed.

*Aqueous liquid*

In some embodiments of an aqueous suspension, the aqueous liquid is water. In some embodiments of an aqueous suspension, the aqueous liquid comprises water and optionally at least one other liquid. In some embodiments of an aqueous suspension, the water is present in an amount greater than 50% v/v relative to the total volume of the water plus the volume of the at least one other liquid. In some embodiments, the amount is greater than 60% v/v or 70% v/v or 96% v/v or 99%v/v. In some embodiments, the amount ranges from 75% to 95%v/v or from 80% to 90% v/v.

Optionally, at least one other solid substance is present in the aqueous liquid, such as, at least one other solid substance that is miscible in a component of the aqueous liquid phase, e.g., water. Or, optionally, at least one other solid substance that is immiscible in a component of the aqueous liquid phase. For example, the at least one other solid substance is in the source of water or is added in a process of gathering the solid particulates.

In some embodiments, the at least one other liquid is an organic liquid. In some embodiments, the organic liquid is chosen from silicones, hydrocarbons, alcohols and mixtures thereof. In some embodiments, the organic liquid is chosen from tar sand, oil sand, coal lignite and mixtures thereof. In some embodiments, the organic liquid is chosen from a glycol, a silicone, and mixtures thereof. In some embodiments, the at least one other liquid is miscible with water or at least partially miscible with water. In some embodiments, the at least one other liquid is mined, e.g., in the process of gathering solid particulates. In some embodiments, the at least one other liquid is added, e.g., by a processing step before or after mining solid particulates or for any other reason.

Water is obtainable from many sources. In some embodiments, the water is from sources of fresh water or sources of saline water. In some embodiments, the water is brackish or brine. In some embodiments, the water is from a source chosen from brine ponds, sea water, ocean water, lakes, ponds, ground water, and mixtures thereof. For example, water sources are brackish or brine, including a source chosen from brine ponds, sea water, ocean water, lakes, ponds, municipal water, tap water, ground water, and mixtures thereof.

The density of water is approximately 1.0 g/cm$^3$ for water in its pure state. Water's density does not materially change with temperature below its boiling point of 100 °C or typical atmospheric pressures pressure. In any case the reference point is at 4°C (39 °F) as a reference since water at this point has its highest density of 1000 kg/m$^3$.

Specific gravity or relative density) SG is defined as the ratio of the density of a substance to the density of water at a specified temperature and can be expressed as

$$SG = \rho_{substance} / \rho_{H2O}$$

where SG = Specific Gravity of the substance

$$\rho_{substance} = \text{density of the fluid or substance } [kg/m^3]$$

$$\rho_{H2O} = \text{density of water - normally at temperature } 4\ ^oC\ [kg/m^3]$$

It is common to use the reference density of water at 4 ° C (39°F) as a reference since water at this point has its highest density of 1000 kg/m$^3$. Since Specific Gravity - SG - is dimensionless, it has the same value in the SI system and the imperial English system (BG). SG of a fluid has the same numerical value as its density expressed in g/mL or Mg/m$^3$. Water is normally also used as reference when calculating the specific gravity for solids.

Water is typically thought of as a Newtonian fluid, meaning the shear stress is linearly proportional to the shear rate (viscosity). The viscosity is constant.

Solids solvated into an aqueous liquid tends to raise the specific gravity of the aqueous liquid. For example, if brine has a density of 1,200 kg/m$^3$, the specific gravity is 1.200.

Solid particulates, such as minerals, suspended in water (e.g., mineral slurries) are referred to as percent solids suspended. Of course, at the same time, optionally, minerals can be dissolved solids in water such as calcium chloride (salt) and other soluble minerals. Solid minerals can be suspended in water or an aqueous liquid using a suspending agent. The addition of minerals at a higher specific gravity increases the density of the water (aqueous) /mineral slurry. In other words, the aqueous suspension of solid particulates in an aqueous liquid,

A calculation, for example, of water/minerals slurries is demonstrated as follows:
The density of a slurry can be calculated as

$$\rho_m = 100 \,/\, [cw \,/\, \rho s \,+\, [100 - cw] \,/\, \rho l] \qquad\qquad (1)$$

where

$\rho_m$ = density of slurry (lb/ft$^3$, kg/m$^3$)
cw = concentration of solids by weight in the slurry (%)
$\rho s$ = density of the solids (lb/ft$^3$, kg/m$^3$)
$\rho l$ = density of liquid without solids (lb/ft$^3$, kg/m$^3$)

Slurry concentration by weight can be measured by evaporating a known weight of slurry - and measure the weight of dried solids.

The density of a slurry where the density of the solids is 2500 kg/m$^3$ the density of the liquid is 1000 kg/m$^3$ the concentration of the solids is 30% can be calculated as $\rho m = 100 \,/\, [(30\,\%) \,/\, (2500\ kg/m3) + [(100\,\%) - (30\,\%)] \,/\, (1000\ kg/m3)] = 1220$ kg/m$^3$

The density of a slurry where the density of the solids is 2500 kg/m$^3$ the density of the liquid is 1000 kg/m$^3$ the concentration of the solids is 70% can be calculated as

$\rho_m = 100 \,/\, [(30\,\%) \,/\, (2500\ kg/m^3) + [(100\,\%) - (70\,\%)] \,/\, (1000\ kg/m^3)] = 2161$ kg/m$^3$

This is an increase in density of 77% over a 30% slurry and 216% over the density of water.

*Solid particulates*

Solid particulates, such as minerals, suspending agents and/or dispersing agents, and other dense solids tends to make the flow characteristics of water or the aqueous liquid more non-Newtonian, meaning the viscosity does depend on stresses and flow changes under force.

The specific gravity of the solid particulates varies from 0.9 g/cm$^3$ to 6 g/cm$^3$, or from 1.9 g/cm$^3$ to 6.0 g/cm$^3$ or from 2.5 g/cm$^3$ to 5.5 g/cm$^3$ or from 3.4 g/cm$^3$ to 4.8 g/cm$^3$.

The solid particles of the suspension are the solid particulates.

In some embodiments, the solid particulates are manmade, of natural origin, or mixtures thereof. In some embodiments, the solid particulates are inorganics, organics, or mixtures thereof.

In some embodiments, the solid particulates are chosen from rocks, mineral colloids, organic colloids, mineraloids, and minerals. Mixtures thereof are contemplated. In some embodiments, the solid particulates are mined.

In some embodiments, the solid particulates are chosen from polymers, metallic minerals, and fuels.

In some embodiments, the solid particulates are rocks, and in some embodiments, the rocks are chosen from limestone and gravel.

In some embodiments, the mineral colloids and organic colloids are from soil. In some embodiments, colloids are chosen from crystalline silicate clays, noncrystalline silicate clays, iron and aluminum oxide clays (such as crystalline and noncrystalline varieties thereof), and organic colloid. In some embodiments, the organic colloid is humus.

In some embodiments, the solid particulates are industrial minerals. In some embodiments, the industrial minerals are chosen from aggregates, alunite, asbestos, asphalt (natural), barite, bentonite, borates, brines, carbonates, clays, ball clays, corundum, diamond, diatomite, feldspar, nepheline-syenite, fluorspar, Fuller's earth, garnet, gem minerals, granite, graphite, gypsum, kaolin, kyanite, sillimanite, andalusite, limestone, dolomite, marble, mica, olivine, perlite, phosphate, potash, potassium minerals, pumice, quartz, salt, slate, silica sand, Tripoli, soda ash, sodium bicarbonate, sodium sulfate, staurolite, sulfur, talc, vermiculite, wollastonite, and zeolites.

In some embodiments, the solid particulates are chosen from limestone, clays, sand, gravel, diatomite, kaolin, bentonite, silica, barite, baryte, gypsum, and talc.

In some embodiments, the solid particulates are chosen from coal, lignite, and peat.

In some embodiments, the solid particulates are chosen from cement, slag, and silica fume.

In some embodiments, the solid particulates are chosen from those comprising nickel, silver, diamond, and gold.

In some embodiments, the solid particulates are mineraloids, and in some embodiments the mineraloids are chosen from obsidian, amber, ilmenite, opal, amber, jet, and limonite.

In some embodiments, the solid particulates are chosen from minerals chosen from those in the silicate class, carbonate class, sulfate class, halide class, oxide class, sulfide class, phosphate class, element class, and organic class.

In some embodiments, the minerals are in the silicate class. In some embodiments, the silicates are in the form of rocks. In some embodiments, the silicates are chosen from feldspars, quartzes, olivines, pyroxenes, amphiboles, garnets, and micas.

In some embodiments, the minerals are in the carbonate class. In some embodiments, the carbonates are chosen from calcites, aragonites, dolomites, and siderites. In some embodiments, the carbonate is hanksite.

In some embodiments, the minerals are in the sulfate class. In some embodiments, the sulfates are chosen from anhydrites, celestines, barites, and gypsums. In some embodiments, the sulfates are chosen from chromate, molybdate, selenate, sulfite, tellurate, and tungstate minerals.

In some embodiments, the minerals are in the halide class. In some embodiments, the halide minerals are natural salts, such as, fluorites, halites, sylvites, and sal ammoniac. In some embodiments, the halide class is chosen from fluoride, chloride, bromide, and iodide minerals.

In some embodiments, the minerals are in the oxide class. In some embodiments, the oxide minerals are chosen from hematites, magnetites, chromites, spinels, ilmenites, and rutiles. In some embodiments, the oxide minerals are chosen from oxide and hydroxide minerals.

In some embodiments, the minerals are in the sulfide class. In some embodiments, the sulfide minerals are chosen from pyrite, chalcopyrite, pentlandite, and galena. In some embodiments, the sulfide minerals are chosen from selenides, tellurides, arsenides, antimonides, bismuthinides, and sulfosalts.

In some embodiments, the minerals are in the phosphate class. In some embodiments, the phosphate minerals are chosen from any mineral having a tetrahedral unit A04, in which A is chosen from phosphorus, antimony, arsenic or vanadium. In some embodiments, the phosphate mineral is apatite. In some embodiments, the phosphate minerals are chosen from arsenate, vanadate, and antimonate minerals.

In some embodiments, the minerals are in the elemental class. In some embodiments, the elemental minerals are chosen from gold, silver, copper, antimony, bismuth, graphite, and sulfur. In some embodiments, the elemental minerals are natural alloys, such as, electrum, phosphides, silicides, nitrides, and carbides.

In some embodiments, the minerals are in the organic class. In some embodiments, the organic minerals are chosen from oxalates, mellitates, citrates, cyanates, acetates, formates, and hydrocarbons. In some embodiments, the organic minerals are chosen from whewellite, moolooite, mellite, fichtelite, carpathite, evenkite, and abelsonite.

In some embodiments, the solid particulates are chosen from:

kaolin, including calcined kaolin,
ball clay,
dolomite,
calcium carbonate (also known as limestone),
calcite,
hematite,
apatite,
galena,
glass,
barite and barium sulfate,
baryte,
natural and synthetic bauxite and calcined bauxite,
basalt,
biotite,
magnetite,
muscovite,
copper and ores of copper such as chalcopyrite, bornite, malachite, chalcocite, covellite, tetrahedrite, cuprite, azurite, digenite, and enargite,
iron and ores of iron in a variety of forms, such as hematite, magnetite, limonite, siderite, goethite, chamosite, taconite, martite, and maghemite, silica,

feldspar and all of its varieties, including barium feldspars, such as celsian and hyalophane, plagioclase feldspars, such as albite, oligoclase, andesine, labradorite bytownite, and anorthite,

magnesite and dead burned magnesite

manganese and manganese ore, such as pyrolusite, psilomelane, rhodochrosite, braunite, hausmannite, manganite, and cryptomelane,

titanium dioxide and ores ilmenite and rutile, and

combinations thereof.

The solid particulates in the aqueous suspension of the solid particulates have a size sufficient for the solid particulates to be suspended. In some embodiments, the size is measured using D50. In some embodiments, the D50 ranges from about 0.0001 to 0.15 mm. In some embodiments, the D50 ranges from 0.00024 to 0.004 mm or 0.004 to 0.062 mm or from 0.063 to 0.125 mm. In some embodiments, D50 ranges from 0.00045 to 0.1 or from 0.01 to 0.08 mm. In some embodiments, the D50 ranges from about 0. 1 to 75 mm. In some embodiments, the D50 ranges from 0.25 to 50 mm or 0.4 to 40 mm or from 0.6 to 32 mm. In some embodiments, D50 ranges from 0.5 to 25 or from 1 to 20 mm.

In some embodiments, particle size distribution ranges from 0.010 mm to 10mm.

In some embodiments, the aqueous suspension of the solid particulates has a size measured using D10. In some embodiments, the D10 ranges from about 0.0001 to 6.5 mm. In some embodiments, the D10 ranges from 0.0001 to 0.01 mm or 0.0024 to 4.0 mm or 0.04 to 2.0 mm or from 0.6 to 1.3 mm. In some embodiments, D10 ranges from 0.0045 to 1.0 mm or from 0.1 to 5.0 mm.

In some embodiments, the aqueous suspension of the solid particulates has a size measured using D90. In some embodiments, the D90 ranges from about 0.001 to 35 mm. In some embodiments, the D90 ranges from 0.01 to 32 mm. In some embodiments, D90 ranges from 0.0024 to 4.0 mm or 0.01 to 32 mm or 0.04 to 2.0 mm or from 0.6 to 1.3 mm. In some embodiments, D90 ranges from 0.0045 to 1.0 mm or from 0.1 to 5.0 mm.

In some embodiments, the aqueous suspension of the solid particulates has a size measured using D10 and/or D50 and/or D90. In some embodiments, the values are any combination of those noted above for D10, D50, and D90. In some embodiments, D10 is from 0.0001 to 0.01 mm; D90 is from 0.01 to 32 mm; and D50 is from 0.0001 to 0.15 mm.

The size of the solid particulates (D10, D50, D90, etc.), in some embodiments, is manufactured using one or more sizing process. In some embodiments, the sizing process is chosen from filtering, straining, grinding, and pounding the solid particulates.

The specific gravity of the solid particulates may be used to select combinations of all solids in the aqueous suspension. In some embodiments, the solid particulates have a specific gravity minerals ranging from 0.9 g/cm$^3$ to 6 g/cm$^3$, or from 1.9 g/cm$^3$ to 6.0 g/cm$^3$ or from 2.5 g/cm$^3$ to 5.5 g/cm$^3$ or from 3.4 g/cm$^3$ to 4.8 g/cm$^3$.

*Suspending agents*

The aqueous suspension comprises an amount of at least one suspending agent sufficient to disperse the solid particulates in the aqueous liquid. In some embodiments, the suspending agent is a mineral suspending agent, and organic suspending agent or combinations thereof.

In some embodiments, the effective amount of the at least one suspending agent ranges from 0.025% to 0.125 % by weight relative to the total weight of the at least one mineral suspending agent and the solid particulates. In some embodiments, the amount ranges from 0.028% to 0.113% or 0.030% to 0.100% or 0.033% to 0.092% or 0.085 % to 0.036%.

For example, when the mineral suspending agent is used, the above amounts of the at least one mineral suspending agent make it possible, in some embodiments, to increase the maximum percent by weight of the solid particulates from 2% to 6% compared to a corresponding aqueous suspension without the at least one mineral suspending agent. Thus, the specific gravity increases for the aqueous suspension.

In some embodiments, the at least one mineral suspending agent is a clay chosen from palygorskite, attapulgite, bentonite, sepiolite, and smectite (montmorillonite) minerals such illite, hectorite, and saponite or assemblages of these minerals that can suspend solid particulates.

In some embodiments, the at least one mineral suspending agent is palygorskite. In some embodiments, the palygorskite is from Attapulgus, Georgia.

In some embodiments, the at least one mineral suspending agent is attapulgite. In some embodiments, the attapulgite is from a locality chosen from Palygorskaya, near the Popovka River, Perm, Russia; Attapulgus, Decatur Co., Georgia; at Tafraout, Morocco; and in the Hyderabad deposit, Andhra Pradesh, India. In some embodiments, the attapulgite is from Attapulgus, Decatur Co., Georgia. In some embodiments, the attapulgite is associated with other non-attapulgite minerals, such as montmorillonite, dolomite, calcite, talc, chlorite, quartz, and the like. In some embodiments, the attapulgite is substantially free of non- attapulgite minerals. Such purified attapulgite is, in some embodiments, available by using the methods in U.S. Pat. No. 6,444,601 and U.S. Pat. No. 6,130,179, each of which is incorporated herein in its entirety. Attapulgite that is substantially free of non- attapulgite minerals is sold commercially as ACTI-GEL ® from Active Minerals International, LLC.

In some embodiments, the at least one mineral suspending agent is bentonite. In some embodiments, the bentonite is from a locality chosen from near Rock River, Wyoming and Mississippi. In some embodiments, the bentonite is chosen from calcium bentonite and sodium benonite. In some embodiments, the bentonite is substantially free of non-bentonite minerals.

In some embodiments, the at least one mineral suspending agent is montmorillonite. In some embodiments, the montmorillonite is from a locality chosen from Montmorillon, Vienne, France; at Belle Fourche, Butte Co., South Dakota; and at Clay Spur, near Newcastle, Crook Co., and at Strasburg, Shenandoah Co., Virginia. In some embodiments, the montmorillonite is associated with other non-montmorillonite minerals, such as cristobalite, zeolites, biotite, quartz, orthoclase, dolomite, and the like. In some embodiments, the montmorillonite is substantially free of non-montmorillonite minerals.

In some embodiments, the at least one mineral suspending agent is sepiolite. In some embodiments, the sepiolite is from a locality chosen from in Little Cottonwood Canyon, Salt Lake Co., Utah; from Crestmore, Riverside Co., California; at Ash Meadows, Nye Co., Nevada; and Cerro Mercado, Durango, Mexico. Sepiolite from Spain, Turkey, India and China are also usable. In some embodiments, the sepiolite is associated with other non- sepiolite minerals, such as dolomite. In some embodiments, the sepiolite is substantially free of non- sepiolite minerals.

Organic suspending agents can suspend minerals in water. In some embodiments, organic suspending agents are combined with mineral suspending agents to improve or modify their performance in water, aqueous liquids, or organic fluids such as oil.

In some embodiments, at least one additive is in the dispersed and/or liquid phase of the aqueous suspension of solid particulates. In some embodiments, the at least one additive is a dispersant, a wetting/dispersing agent and/or a neutralizer.

In some embodiments, a dispersant is chosen from substances that, in an aqueous environment, absorb on the at least one mineral suspending agent and have the ability to disaggregate the at least one mineral suspending agent or to stabilize a suspension of the at least one mineral suspending agent. In some embodiments, the dispersant is chosen from condensed phosphates, polyacrylates, organic phosphonates, polysulfonates, sulfonated polycondensates, polymaleates, and polymers derived from natural products. In some embodiments, the clay dispersant is chosen from poly-anionic, poly-cationic, poly non-ionic, and poly-amphoteric dispersants that function as dispersants.

In some embodiments, the dispersant is chosen from tetrasodium pyrophosphate, sodium tripolyphosphate, condensed phosphate dispersants, and sodium salts thereof. In some embodiments, the dispersant is chosen from silicates, quaternary amines, petroleum, sulfonates, soda ash, and lime. In some embodiments, the silicates are chosen from sodium silicates and potassium silicates. In some embodiments, the lime is chosen from lime carbonates.

In some embodiments, the aqueous suspension comprises at least one wetting/dispersing agent in an amount ranging from 0.01 to 6% by weight relative to the weight of the at least one mineral suspending agent and the solid particulates. In some embodiments, the amount ranges from 0.05 to 4% or from 0.1 to 3.5%. The choice of a wetting/dispersing agent is not particularly limited and is sometimes added during processing of the solid particulates. In some embodiments, the at least one suspending agent does not interfere with the wetting/dispersing agent, which is added, e.g., during processing of the solid particulates.

In some embodiments, the wetting/dispersing agent is low to non-foaming in water and has a structure comprising an organic portion that is capable to adsorb onto the surface of the suspended solid particulate. If, e.g., the solid particulate comprises organic particulates (e.g., coal, peat, and the like), the wetting/dispersing agent has a charged hydrophilic portion that is compatible to the continuous phase (e.g., water). If, e.g., the solid particulate comprises inorganic particulates, the wetting dispersing agent has an organic portion that is capable to adsorb onto the surface of inorganic particulates (Bauxite, Iron Ore, Sand, Copper, Molybdenum, Talc, Titanium Dioxide, Calcium Carbonate, Potash, other Industrial Minerals, and the like) and a charged hydrophilic portion that is compatible to the continuous phase (e.g., water).

In some embodiments, the at least one wetting/dispersing agent is chosen from poly anionic organic dispersants, poly cationic organic dispersants, poly non-ionic organic dispersants, poly amphoteric organic dispersants that function as organic (e.g., coal, peat, and the like) particulate dispersants, and poly amphoteric organic dispersants that function as inorganic (Bauxite, Iron Ore, Sand, Copper, Molybdenum, Talc, Titanium Dioxide, Calcium Carbonate, Potash, other Industrial Minerals, and the like) particulate dispersants.

In some embodiments, the at least one wetting/dispersing agent for the particulate is chosen from salts of condensed naphthalene formaldehyde sulfonates, polymerized salts of alkyl naphthalene sulfonic acids, salts of polymerized substituted benzoic alkyl sulfonic acids, salts of ligno sulfonates, and salts of polyacrylates.

In some embodiments, the aqueous suspension comprises at least one additive, such as a neutralizer.

In some embodiments, the aqueous phase of the aqueous liquid has a pH ranging from 2 to 13. In some embodiments, the pH ranges from 2 to 7 or from 4.5 to 9.5 or from 7 to 13. In some embodiments, the pH is adjusted using a neutralizer.

In some embodiments, the neutralizer is selected from gypsum, hydrated lime, ammonium nitrate, and aluminum sulfate. In some embodiments, the neutralizer is chosen from sodium hydroxide, caustic soda, hydrated lime, shell meal, limestone, burned lime, dolomite, sugar beet lime, and calcium silicate. In some embodiments, the neutralizer is chosen from aluminum sulfate, calcium chloride, lime sulfur, ferric sulfate, sulfuric acid, sulfur, and gypsum. In some embodiments, the neutralizer is selected from gypsum, hydrated lime, ammonium nitrate, and aluminum sulfate.

In some embodiments, additives, other than those noted above, are added to the aqueous suspension. In some embodiments, additives are chosen from substances added for processing the solid particulates or water sources. In some embodiments, the at least one additive is a pH modifier.

*Making the **aqueous** suspension*

In some embodiments, the suspension is made by dispersing solid particulates in the aqueous liquid through agitation in the presence of at least one mineral suspending agent. In some embodiments, the agitation is in the presence of one or more additives. In some embodiments, the agitation is in the presence of at least one wetting/dispersing agent and/or at least one clay dispersing agent.

The aqueous liquid, solid particulates, and the at least one mineral suspending agent are mixed in any order. In some embodiments, the aqueous liquid, solid particulates, the at least one mineral suspending agent, and/or optionally the at least one dispersing agent for the at least one mineral suspending agent, and/or optionally the at least one wetting/dispersing agent for the solid particulates, and/or one or more additional additives (a neutralizer, the at least one other solid substance, and the others noted herein) are mixed in any order.

In some embodiments, both the aqueous liquid and solid particulates are added to the at least one mineral suspending agent. In some embodiments, both the at least one mineral suspending agent and the solid particulates are added to the aqueous liquid.

In some embodiments, agitation is sufficient to substantially homogenize the aqueous suspension. In some embodiments, the agitation is sufficient to homogenize the aqueous suspension. In some embodiments, the homogenization makes is possible for the solid particulates to settle in a manner inconsistent with that predicted by Stokes Law of settling.

In some embodiments, the aqueous suspension is an inhomogeneous aqueous suspension.

In some embodiments, the agitation is mechanical. In some embodiments, the agitation is chosen stirring, pumping, and milling. In some embodiments, the solid particulates are present in an amount sufficient to create shear forces on the aqueous liquid and to facilitate homogenization of the aqueous suspension. In some embodiments, agitation is the result of concrete drilling, ultrasound dispersing, or cavitation.

In some embodiments, the mineral suspending agent is added in the form of a powder clay. In some embodiments, the powder clay is dry before the addition.

In some embodiments, the mineral suspending agent is added in the form of a pre-gel consisting of the at least one mineral suspending agent and water. In some embodiments, the pre-gel consists of from 1% to 15% of the at least one mineral suspending agent by weight and the remainder water. In some embodiments, the water has a pH chosen from values already disclosed herein regarding the liquid phase of the aqueous suspension. In some embodiments, the water comprises at least one neutralizer chosen from those already disclosed herein regarding the liquid phase of the aqueous suspension.

In some embodiments, the mineral suspending agent is added in the form of a pre-dispersion consisting of the at least one mineral suspending agent, a clay dispersant, and water. In some embodiments, the pre-dispersion consists of from 1% to 45% of the at least one mineral suspending agent by weight, from 0.05 to 1.0% by weight of the clay dispersant, and the remainder water. In some embodiments, the water has a pH chosen from values already disclosed herein regarding the liquid phase of the aqueous suspension. In some embodiments, the water comprises at least one neutralizer chosen from those already disclosed herein regarding the liquid phase of the aqueous suspension.

In some embodiments, the aqueous suspension is made by adding a wetting/dispersing agent to an aqueous liquid; and thereafter adding at least one mineral suspending agent; and thereafter adding solid particulates with agitation.

In some embodiments, the aqueous suspension is made by preparing a mineral suspending agent in the form of a pre-gel adding a dispersing agent for the at least one mineral suspending agent to the aqueous liquid; adding the pre-gel to said slurry water; and thereafter adding at least one mineral suspending agent; and thereafter adding solid particulates with agitating.

In some embodiments, the aqueous suspension is made by preparing a mineral suspending agent in the form of a pre-dispersion by adding a clay dispersant and a clay to the aqueous liquid while agitating and continuing to agitate until the clay is dispersed to form a pre-dispersion; adding a dispersing agent for the at least one mineral suspending agent to the aqueous liquid; adding said mineral suspending agent in the form of a pre-dispersion to the aqueous liquid; and adding solid particulates with agitation.

*Flowing the **aqueous** suspension*

Flowing fuel into a power generator makes it possible to generate electrical power. The power generator is stationary or portable; chosen from stationary or portable hydroelectric power generators, such as portable hydroelectric power generators, optionally mounted on a vehicle, such as a vehicle (for example a tow truck) used to service other vehicles (including electric vehicles, such as those in which the electric vehicles' batteries have a power stored at an amount less than 90%, 80%, 70%, 60%, 50%, 40%, 30%, 20%, 10%, 5%, or 1% of the electric vehicles' batteries' storage capacities); and combinations thereof.

The generated power is thus directly or indirectly transferred to one or more loads. The one or more loads are chosen from batteries, such as batteries in vehicles, including batteries in electric-vehicles, including batteries in electric cars, batteries in homes, including batteries for appliances (such as large scale computer storage facilities), buildings, including batteries for storing power for peak use or grid outages, inverters for converting alternating current to direct current and *vise versa,* alternators for generating alternating current, transformers, and combinations thereof, optionally in which the one or more loads are connected to a power grid, a power distribution network, such as residential (including a single residence), commercial (including a single commercial structure such as a building), transmission lines, or combinations thereof.

The aqueous suspension makes it possible to transport minerals long distances, meaning that the fuel would increase (based on the increase in specific gravity relative to the aqueous liquid itself) the amount of generated power from the generator. Transporting is facilitated by the addition of an effective amount of at least one mineral suspending agent.

The flowing of the solid particulates of the aqueous suspension may be to or through two or more generators arranged in series and/or parallel.

In some embodiments, the solid particulates are transported a distance greater than or equal to 50m. In some embodiments, the distance is greater than or equal 0.600km or 5km or 10km. In some embodiments, the distance ranges from 40km to 500km or from 100km to 420km or from 200km to 380km.

In some embodiments, transportation comprises flowing the aqueous suspension of solid particulates in a conduit. In some embodiments, the conduit comprises a pipeline, weirs, u-shaped structures, moving conveyers, and other structures to convey water over distances greater than 50m. In some embodiments, the pipes in the pipeline have in inner diameter of at least 1.28cm or 5cm or 300cm. In some embodiments the pipes have an inner diameter ranging from 1.28cm to 200cm or from 5cm to 100cm or from 10cm to 75cm. In some embodiments, the conduits, pipelines, u-shaped structures, weirs, moving conveyers and other structures to convey water over distances greater than 200m have a transverse dimension of at least 1.28cm or 5cm or 100cm. In some embodiments, the conduits, pipelines, u-shaped structures, weirs, moving conveyers and other structures to convey water over distances greater than 50m have a transverse dimension ranging from 1.28cm to 300cm or from 10cm to 200cm or from 75cm to 150cm. The conduit is configurable to be coupled to flow the fuel through the generator.

In some embodiments, the transporting comprises flowing the aqueous suspension of the solid particulates in the conduit such that the solid particulates are transported the entire distance. In some embodiments, the transporting comprises flowing the aqueous suspension of the solid particulates in the conduit such that the solid particulates are transported the at least 10m, 20m, 50m, 100m, or 1,000m of the distance.

In some embodiments, transporting comprises pumping the aqueous suspension. In some embodiments, transporting is further facilitated by gravity and the placement of the conduit.

For example, the aqueous suspension (a flowable Slurries/mineral suspensions) can be elevated from ground level to virtually any height by the use of pumps specifically designed to pump mineral slurries. Those pumps are described as centrifugal pumps, positive displacement pumps and piston pumps. Other pumps not described may be used as well. The size of the pump and horsepower are determined by the specific gravity of the liquid and the height to which the mineral suspension will be elevated. Pumps may be assisted with compressed air to reduce the cost of pumping the aqueous suspension to the elevated tank.

In some embodiments, the solid particulates are transported back and reused through the same generators, e.g., using gravity and/or pumps noted herein. For example, water or mineral slurries are elevatable in the tower and stored for future release to a turbine generator to generate electricity.

In some embodiments, the aqueous suspension is stored in a container suitable for storing an aqueous suspension of solid particulates. In some embodiments, the containers are chosen from the conduit and shipping containers (vehicles). In some embodiments, the shipping containers are chosen from intermodal freight containers, intermediate bulk shipping containers, drums, unit load devices, and specialized shipping containers suitable for an aqueous suspension of solid particulates. Water storage towers are common in municipal, industrial and agricultural applications. Water is elevated by a pump to the water tower and the resulting head pressure is used in the water system to provide water at a relatively constant head pressure to the system served. For fluctuations in head pressure or turbidity in fuel flow, a flywheel could be used to dampen the fluctuations in the electricity generated by the method. In this invention, mineral slurries are elevatable in the tower and stored for future release to a turbine generator to generate electricity.

In some embodiments, the one or more containers have a capacity ranging from a lower end to a higher end, in which the lower end of the range is independently selected from 200, 500, 1,000 5,000 or 10,000 gallons (757.082; 1,892.705; 3,785.41; 18,927.05; or 37,854.1 L), and in which the upper end of the range is independently selected from 50,000, 100,000, 200,000, 500,000, 1,000,000, 1,500,000, 2,000,000, or 4,000,000 gallons (189,270.5; 378,541; 757,082; 1,892,705; 3,785,410; 5,678,115; 7,570,820; or 15,141,640 L), such as from 200 to 50,000 gallons (757.082 to 189,270.5 L) or from 10,000 to 2,000,000 gallons (37,854.1 to 7,570,820 L) or from 1,000 to 1,000,000 gallons (3,785.41 to 3,785,410 L) or from 2,000,000 to 4,000,000 gallons (7,570,820 to 15,141,640 L). In some embodiments, the one or more containers are open (to, for example, air) containers or closed containers, (for example, gas pressurizible, e.g., by an air compressor, to allow gas (like air) to occupy part of the closed containers to thereby facility the flowing. In some embodiments, the one or more containers are for municipal, industrial, residential, commercial, agricultural purposes or combinations of purposes thereof, such as towers, vats, (complete when discussing). In some embodiments, the one or more containers are for commercial purposes, optionally mounted on a vehicle, such as a vehicle (for example a tow truck) used to service other vehicles (including electric vehicles, such as those in which the electric vehicles' batteries have a power stored at an amount less than 90%, 80%, 70%, 60%, 50%, 40%, 30%, 20%, 10%, 5%, or 1% of the electric vehicles' batteries' storage capacities. In some embodiments, the one or more containers are combinations thereof. In some embodiments, the container is configured with alternative energy sources, including, e.g., a solar panel or windmill associated with an electric generator for the alternative energy source.

By way of example, a 2,000,000 gal (7,570,820 L) is capable of generating about 8.7 MW Fe ore discharged in 2-3 hours. A 1,000,000 gallon (3,785,410 L) or 500,000 gallon (1,892,705 L) container would generate ½ or ¼ the wattage in proportionate time.

In some embodiments, the flowing is facilitated by or results from one or more of the following: gravity; pressure, such as gas pressure above the aqueous suspension of solid particulates in a closed container; pumps, such as positive displacement pumps or piston pumps; and combinations thereof. In some embodiments, the solid particulates of the aqueous suspension are returned to the same or different container for reuse through the same or different power generator or another set of power generators.

Loads

As noted above, loads could be resistive, capacitive or inductive.

In some embodiments, the power generating is for one or more of the following: residential alternating current outlet charging, such as 110 v, 220v or 440 v or combinations thereof; direct current fast charging (DCFC) such as along corridors optionally at stationary stations, private or public locations, including stores (grocery, goods, services, etc.), theaters, coffee shops, and combinations thereof; such as along highways and roads optionally via battery towers for DCFC of communities or electric vehicles' batteries; such as for peak use for communities for easing peak use of power on the power source, such as the grid; such as in tandem with other renewable power sources, such as solar, wind, gas, coal, or nuclear power sources.

By way of emphasis, a diesel trucks exist, in part, because the charging station cannot be built. Chargers are expensive and a gas (diesel fill-up) station is not a transformer site. So, it seems unfeasible possible for electric trucks and cars without alternatives to the current situation. For convenience, locating a system at a truck stop or gas stations seems desirable.

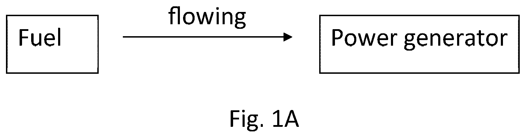

Fig. 1A shows a system and method. Fuel is fuel flowed to a power generator to generate electricity for one or more loads.

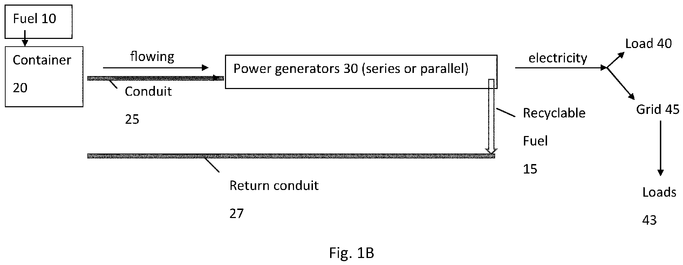

Fig. 1 B shows a system and method. Fuel 10 is added to container 20 where fuel 10 is stored for flowing though conduit 25 to one or more powers 30, which are in series or in parallel or combinations thereof. Electricity is usable for load 40 and/or to supply the grid, which is usable for more loads 43. Fuel flowed to produce electricity, is recyclable fuel 15, which is returned via return conduit 27 to container 20 for reuse.

The use of the method and system as an alternative power source is disclosed.

**Examples**

The theoretically power available from falling water can be expressed as follows:

$$P_{th} = \rho \; q \; g \; h$$

where

$P_{th}$ = power theoretically available (W)

$$\rho = \text{density (kg/m}^3) \ (\sim 1000 \ \text{kg/m}^3 \ \text{for water})$$

$$q = \text{water flow (m}^3/\text{s})$$

$$g = acceleration\ of\ gravity\ (9.81\ m/s^2)$$

h = falling height, head (m)

Example - Hydro-power

The theoretically power available from a flow of *1 m³/s* water with a fall of *100 m* can be calculated as follows:

$$\begin{aligned} P \quad &= (1000 \ \text{kg/m}^3) \ (1 \ \text{m}^3/\text{s}) \ (9.81 \ \text{m/s}^2) \ (100 \ \text{m}) \\ &= 981 \ 000 \ \text{W} \\ &= \underline{981} \ \text{kW/ sec} \end{aligned}$$

Increasing the density of the water by using a minerals suspension of Hematite at 5200 kg/m3 as expressed above:

$$\begin{aligned} P \quad &= (2353 \ \text{kg/m}^3) \ (1 \text{m3/S}) \ (9.81 \ \text{m/S3}) \ (100) \\ &= 2308 \ \text{kW /sec} \end{aligned}$$

This is a 235% increase in power generated as compared to water. Therefore, in the example the storage density of this battery is 235% greater than the equal volume of water.

Water towers and water storage can be designed in many forms. A typical large water tower can store 7,570 cubic meters of water (2 million US gallons). If a water tower would store 7,570 cubic meters of hematite slurry and feed a generator at 1 cubic meter /sec it would have the capacity to generate 8.308 Megawatts per hour. At the feed rate of 1 m³/second 7,570 cubic meters of mineral suspension would feed a turbine for 126 minute (2.10 hours). The total energy stored in the 7,570 cubic meter battery would be 17.446.8 megawatts in 126 minutes.

The same water tower using water would generate 3.531 megawatts per hour or 7.416 megawatts in 126 minutes.

Systems of this type can be built as stand-alone storage facilities or incorporated into the construction of high rise buildings or residential dwellings to act, e.g., as emergency electrical storage. Multiple systems can be managed by electrical grid operators (via software or artificial intelligence) to balance short term demands for local or regional demands at peak demand periods.

It is envisioned that power supplied from one or more systems to meet peak demand will be sold at peak demand rates which will generate a higher rate of return on system investment. Recharging the system can be at hours of low demand on the grid. Recharging the system would sometimes be achievable by pumping stored minerals suspension to the elevated storage site or rerouting to another generator using either pumps or gravity (from a higher position to a lower position). Charging of electrical vehicles for transportation will place significant demands on the electrical grid. As more electrical vehicles enter the transportation network the amount of energy consumed to recharge lithium batteries is significant. It is estimated that it will take, in the United State alone, 504 Terra watts to convert over the road truck traffic from diesel power to Lithium ion power stored electricity. This will need to be new renewable generating capacity to be clean energy stored in batteries which are dispersed through out the grid system/localities to power these vehicles. This estimate does not include automobiles.

Charging of electrical vehicles for transportation will place significant demands on the electrical grid. As more electrical vehicles enter the transportation network the amount of energy consumed to recharge lithium batteries is significant. Here are 3 levels of charging for passenger vehicle:

Level 1

Level 1 equipment provides charging through a common residential 120-volt (120V) AC outlet. Level 1 chargers can take 40-50+ hours to charge a BEV (Battery Electric Vehicle) to 80 percent from empty and 5-6 hours for a PHEV (Plug in Hybrid Vehicle).

Level 2

Level 2 equipment offers higher-rate AC charging through 240V (in residential applications) or 208V (in commercial applications) electrical service, and is common for home, workplace, and public charging. Level 2 chargers can charge a BEV to 80 percent from empty in 4-10 hours and a PHEV in 1-2 hours.

Direct Current Fast Charging (DCFC)

Direct current fast charging (DCFC) equipment offers rapid charging along heavy-traffic corridors at installed stations. DCFC equipment can charge a BEV to 80 percent in just 20 minutes to 1 hour.

Level 2 and DCFC equipment has been deployed at various public locations including, for example, at grocery stores, theaters, or coffee shops. Which places significant demand on electrical grid systems.

Current DCFC systems powered by the grid have the inefficiency of converting AC (alternating current) power to DC Power (Direct Current). The Battery Tower concept using local generation can generate DC current power to quickly charge vehicles at Truck Stop locations or direct wired to local communities. This system could significantly reduce the power demands on the renewable energy electric grid. Directly wiring home charging stations to operate on DC will lower their cost to consumers and make EV's more affordable.

Because many modern devices operate internally on direct current (DC), alternating current (AC) electricity is then converted back to DC electricity by the adapter of each device. This double energy conversion, which generates up to 30% of energy losses, can be eliminated if the building's electrical distribution is converted to DC. Battery design will allow them to discharge on DC current, which is more efficient to charge Automotive and truck batteries.

For example, in a high rise building, one or more elevators create pressurize air usable to flow fuel, e.g., to the elevated position for use or for power generation. The container in a building is, e.g., located at a higher floor and gravity is usable for power generation.

For example, in a residential dwelling, pumps are usable to flow fuel, e.g., to the elevated position (e.g., an attic or rooftop) for use or for power generation. The container in a residential dwelling is, e.g., located at a position where gravity is usable for power generation in times of need (e.g., shortage or emergency) or desire (e.g., peak demand hours for electricity use from an associated grid).

Renewable energy has variable production due to the availability of sunlight or wind. The availability of renewable energy does not always meet the needs of the energy grid demand.

The present system and method are usable with other sources, whether renewable or not.

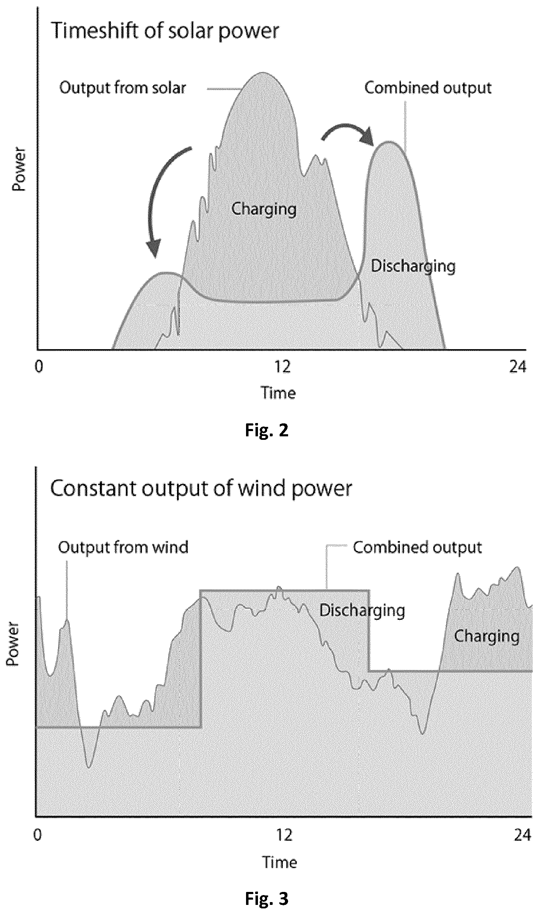

Solar power is available a limited number of hours per day. Grid demand can peak when sunlight is not available. Weather conditions can inhibit the collection of solar power making the needs for large scale storage even more necessary for the use of solar power. Fig. 2 represents a time shift of solar power.

Wind power is more constant that solar but still has the same issues related to the variability of the wind or the total lack of wind to drive wind turbines. Fig. 3 represents a constant output of wind power.

As the system becomes more intricate, the system lends itself to control by artificial intelligent computer systems. For example, algorithms, in some embodiments, could extrapolate or interpolate or otherwise simulate power usage by one or more power consumers or systems. The algorithm output, models, results from the algorithm's application to data sets. The models could automate decision making with artificial intelligence. In some cases, the models are machine learning models trained by application to a sample data set whose data serves as a basis for real world predictions. Although supervised machine learning (classic machine learning) is possible, unsupervised or reinforcement machine learning tend to be preferred as a way to automate larger numbers of consumers and energy grids. Open source machine learning frameworks are available.

Example

A structure has a container for storing 1000 gallons of aqueous suspension. Iron ore (72% by weight of suspension) and ACTI-GEL ® (0.04 w/w% of iron ore) are added to the container with water, either at the time of use, or stored ready to use. When power is needed or desired, the aqueous suspension is flowed through a 1-3 inch ID pipe to a power generator, which supplies the load, charges a lithium ion battery, and adds unused power to the grid. During peak hours (fee for public utility electric), the battery is used to power the loads of the structure. During off peak hours, the aqueous suspension is transported to the original container or a second container using a pump. The second container is either in the same structure or a different structure. And the aqueous suspension in the second container is useable for fueling another generator to generate power for the same or other loads. In this sense, the example is a network of containers, and generators usable for powering various loads in the same or different structures. Keeping the distance between the generator and the load small, when compared to loads supplied by the power grid is more efficient, and prevents energy loss inherent in passing power over long distances.

Example

A multifloored structure has a container for storing 10,000 gallons of aqueous suspension. Iron ore (88% by weight of suspension) and ACTI-GEL ® (0.10 w/w% of iron ore) are added to the container with water, either at the time of use, or stored ready to use. When power is needed or desired, the aqueous suspension is flowed, with gravity, through a 2-6 inch ID pipe to a power generator, which supplies the load, charges a rare earth battery and/or lithium ion battery. During peak hours (fee for public utility electric), the battery is used to power the loads of the structure or fuel is flowed to a second generator positioned on a lower floor with gravity. During off peak hours, the aqueous suspension is transported to the original container or a second container (same floor) using a pump. The second container is either in the same structure or a different structure. And the aqueous suspension in the second container is useable for fueling another generator to generate power for the same or other loads. In this sense, the example is a network of containers, and generators usable for powering various loads in the same or different structures. Keeping the distance between the generator and the load small, when compared to loads supplied by the power grid is more efficient, and prevents energy loss inherent in passing power over long distances. The multifloored building is, e.g., and office building, or a data storage center for multiple computers.

Example

A pipeline is about 150 miles long and transports phosphates (50-70% by weight of the suspension) with the aid of ACTI-GEL® (0.06 w/w% of iron ore) from a higher to lower elevation (2000 feet lower). The pipeline is reconfigured with intermittent outlets to flow some of the aqueous suspension through a generator (one for each outlet) to provide power but return the aqueous suspension to the pipeline. When power is needed or desired, the aqueous suspension is flowed, through the outlet, through a 1-6 inch ID pipe to a power generator, which supplies the load and/or charges and/or lithium ion battery.

Along and nearby the pipeline are segments with windmill farms, which work when the wind sufficiently turns the propellers. By using the power generated from the pipeline flowing of the phosphate, the network of pipeline and windmill generated power makes it possible to use fewer batteries (compared to just windmill farms) or no batteries to supply power to a community.

Example

A solar powered facility works about 9 hour a day and intermittently during daylight hours as interrupted by storms and clouds, etc. Typically, demand is higher at night or during interruptions.

A 2,000,000 gallon container contains iron ore (85% by weight of suspension) and ACTI-GEL ® (0.10 w/w% of iron ore),which are added, either at the time of use, or stored ready to use. When power is needed or desired, the aqueous suspension is flowed, with gravity, through a 2-6 inch ID pipe to a power generator, which supplies the loads of the facility, and if unused, charges a rare earth battery and/or lithium ion battery. During working periods of the solar power generator (non-interrupted daytime), solar power returns the suspension to the container for renewed use, and afterwards, the batteries are recharged or solar power supplies the loads of the facility.

Example

An electric car is located miles from a power source in a desert and the electric car's battery needs a charge. A service truck transports a generator and a closed 500 gallon container with an aqueous suspension of solid particulates including iron ore and ACTI-GEL®. The top portion above the suspension is pressurized by an air compressor using air or nitrogen gas to flow the aqueous suspension through a generator and return the suspension to the container. Pressurization is achieved by a battery supplying power to the air compressor on the service truck. The electric car's battery is recharged sufficiently to allow the electric car to continue to its destination. Furthermore, this truck has a flywheel, supplied with power by the battery, sufficient to dampen fluctuations in head pressure as the fuel flows from the closed tank.

The dispatcher of the service truck above could have sent a second truck, like the one that was sent, but the second service truck's pressurization is powered by a gas generator that supplies electricity to the air compressor. Choice of a third truck, which takes power from another grid (solar, gas), is rejected by the dispatcher based on the remote location of the disabled electric car.

The dispatcher is choosing an efficient system. Using compressed air generated from the turbine shaft to pump the aqueous suspension back to the top of the closed container will allow us to improve the efficiency of the method of generating electricity with a container. The addition of an air compressor to the shaft of the turbine to create high pressure air. The high pressure air is usable to pressurize containers creating a lift of the aqueous suspension. Air driving a positive displacement or centrifugal pumps is able to provide additional lifting power to return the aqueous suspension to the container. The second truck is less environmentally friendly. The third truck is dependent on other electricity sources..

Example

The method of generating electricity flows fuel into one or more power generators to generate electrical power; and directly or indirectly transfers the generated power to one or more loads. The fuel comprises an aqueous suspension of solid particulates including iron ore and ACTI-GEL® in an aqueous liquid and the solid particulates have a specific gravity ranging from 0.9 g/cm$^3$ to 6 g/cm$^3$. By keeping the generated power from the method closer to the one or more loads, energy savings may be realized by a consumer.

The present method is used in a network having one or more renewable electricity supplies, such as hydroelectric, windmill power supplies, solar power supplies or combinations thereof.

An aspect of the invention is any system or network practicing the method as disclosed herein.

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

**Claims**

1. A method of generating electricity using an energy storage system for use with renewable and non-renewable energy sources, comprising

   flowing fuel into a power generator to generate electrical power; and
   directly or indirectly transferring the generated power to one or more loads;
   wherein the fuel comprises an aqueous suspension of solid particulates in an aqueous liquid comprising water, optionally wherein the solid particulates have a specific gravity ranging from 0.9 g/cm$^3$ to 6 g/cm$^3$, or from 1.9 g/cm$^3$ to 6.0 g/cm$^3$ or from 2.5 g/cm$^3$ to 5.5 g/cm$^3$ or from 3.4 g/cm$^3$ to 4.8 g/cm$^3$.

2. The method of claim 1, wherein the aqueous suspension of the solid particulates comprises solid particulates in the aqueous liquid in the presence of at least one suspending agent, especially, at least one mineral suspending agent, and optionally at least one additive, especially, at least one wetting/dispersing agent and at least one neutralizer, in a dispersed phase and/or a liquid phase of the aqueous suspension, and optionally wherein, when present, the at least one suspending agent is present in an amount ranging from 0.025% to 0.125 % by weight relative to the total weight of the at least one suspending agent and the solid particulates, especially, the amount being from 0.028% to 0.113% or 0.030% to 0.100% or 0.033% to 0.092% or 0.085 % to 0.036%; and optionally wherein, when present, the at least one additive is present in an amount ranging from 0.01% to 6.0 % by weight relative to the total weight of the at least one additive, the at least one suspending agent and the solid particulates, especially, the amount being from 0.05% to 4.0 % or from 0.1 % to 3.5%

3. The method of claims 1-2, wherein

   the aqueous liquid is water; or
   the aqueous liquid comprises water and at least one other liquid;
   and wherein water is present in an amount greater than 50% v/v relative to the total volume of the water plus the volume of the at least one other liquid, such as the amount being greater than 60% v/v or 70% v/v or 96% v/v or 99%v/v or the amount ranges from 75% to 95%v/v or from 80% to 90% v/v; and
   optionally at least one other solid substance is present in the aqueous liquid, such as, the at least one other solid substance is miscible in a component of the aqueous liquid phase, e.g., water, or the at least one other solid substance is immiscible in a component of the aqueous liquid phase, e.g., the at least one other solid substance is in the source of water or is added in a process of gathering the solid particulates.

4. The method of claim 3, wherein the at least one other liquid is an organic liquid, such as an organic liquid is chosen from the group consisting of silicones, hydrocarbons, alcohols and mixtures thereof, for example, the at least one other the organic liquid is chosen from the group consisting of a glycol, a silicone, and mixtures thereof; or wherein the at least one other liquid is miscible with water or at least partially miscible with water.

5. The method of claims 1-4, wherein the water is from sources of fresh water or sources of saline water, such as brackish or brine, including a source chosen from the group consisting of brine ponds, sea water, ocean water, lakes, ponds, municipal water, tap water, ground water, and mixtures thereof.

6. The method of claims 1-5, wherein the solid particulates are present in the amount ranging from 5% to 95% by weight of solid particulates relative to the total weight of the aqueous liquid plus the dry weight of the solid particulates (%w/w), for example, wherein the solid particulates are present in an amount ranging from 10% to 90% w/w by weight of solid particulates relative to the total weight of the water plus the dry weight of the solid particulates, for example, the amount ranges from 20% to 85% w/w, 15% to 80%w/w or from 20% to 70% w/w or from or 25% to 60% w/w.

7. The method of claims 1-6, wherein the solid particulates comprise at least one mineral suspending agent such as attapulgite, sepiolite, palygorskite, bentonite, smectites, such as montmorillonite clay minerals, for example, illite, hectorite and saponite nontronite, and beidellite; and iron ore; or combinations thereof, and especially attapulgite that is substantially free of non- attapulgite minerals and iron ore.

8. The method of claims 1-7, wherein the power generator is

   stationary or portable;
   chosen from stationary or portable hydroelectric power generators, such as portable hydroelectric power generators, optionally mounted on a vehicle, such as a vehicle (for example a tow truck) used to service other vehicles (including electric vehicles, such as those in which the electric vehicles' batteries have a power stored at an amount less than 90%, 80%, 70%, 60%, 50%, 40%, 30%, 20%, 10%, 5%, or 1% of the electric vehicles' batteries' storage capacities); and
   combinations thereof.

9. The method of claims 1-8, wherein the one or more loads are chosen from batteries, such as batteries in vehicles, including batteries in electric-vehicles, including batteries in electric cars, batteries in homes, including batteries for appliances (such as large scale computer storage facilities), buildings, including batteries for storing power for peak use or grid outages, inverters for converting alternating current to direct current and *vise versa,* alternators for generating alternating current, transformers, and combinations thereof, optionally in which the one or more loads are connected to a power grid, a power distribution network, such as residential (including a single residence), commercial (including a single commercial structure such as a building), transmission lines, or combinations thereof.

10. The method of claims 1-9, further comprising, before flowing, storing the aqueous suspension of solid particulates in which one or more portable or stationary containers for supplying the fuel to the power generator to generate electric power.

11. The method of claim 10, wherein the one or more containers

    have a capacity ranging from a lower end to a higher end, in which the lower end of the range is independently selected from 200, 500, 1,000, 5,000 or 10,000 gallons (757.082; 1,892.705; 3,785.41; 18,927.05; or 37,854.1 L), and in which the upper end of the range is independently selected from 50,000, 100,000, 200,000, 500,000, 1,000,000, 1,500,000, 2,000,000 or 4,000,000 gallons (189,270.5; 378,541; 757,082; 1,892,705; 3,785,410; 5,678,115; 7,570,820; or 15,141,640 L), such as from 200 to 50,000 gallons (757.082 to 189,270.5 L) or from 10,000 to 2,000,000 gallons (37,854.1 to 7,570,820 L) or from 1,000 to 1,000,000 gallons (3,785.41 to 3,785,410 L) or from 2,000,000 to 4,000,000 gallons (7,570,820 to 15,141,640 L);
    are open (to, for example, air) containers or closed containers, (for example, gas pressurizible, e.g., by an air compressor, to allow gas (like air) to occupy part of the closed containers to thereby facility the flowing;
    are for municipal, industrial, residential, commercial, agricultural purposes or combinations of purposes thereof, such as towers, vats, and tanks;
    are for commercial purposes, optionally mounted on a vehicle, such as a vehicle (for example a tow truck) used to service other vehicles (including electric vehicles, such as those in which the electric vehicles' batteries have a power stored at an amount less than 90%, 80%, 70%, 60%, 50%, 40%, 30%, 20%, 10%, 5%, or 1% of the electric vehicles' batteries' storage capacities); or
    combinations thereof.

12. The method of claims 10-11, wherein the flowing is aided by or results from one or more of the following:

    gravity;
    pressure, such as gas pressure above the aqueous suspension of solid particulates in a closed container;
    pumps, such as positive displacement pumps or piston pumps; or
    combinations thereof.

13. The method of claims 1-12, wherein the power generating is for one or more of the following:

   residential alternating current outlet charging, such as 110 v, 220v or 440 v or combinations thereof; and/or direct current fast charging (DCFC) such as along corridors optionally at stationary stations, private or public locations, including stores (grocery, goods, services, etc.), theaters, coffee shops, and combinations thereof; such as along highways and roads optionally via battery towers for DCFC of communities or electric vehicles' batteries; such as for peak use for communities for easing peak use of power on the power source, such as the grid; such as in tandem with other renewable power sources, such as solar, wind, gas, coal, or nuclear power sources.

14. The method of claims 1-13, wherein the method of generating electricity is combined with one or more electricity supplies, especially renewable electricity supplies, such as hydroelectric, windmill power supplies, solar power supplies or combinations thereof.

| Fuel | → flowing → | Power generator |

Fig. 1A

Fuel 10

Container 20 → flowing → Conduit 25 → Power generators 30 (series or parallel) → electricity → Load 40, Grid 45

Recyclable Fuel 15

Return conduit 27

Grid 45 → Loads 43

Fig. 1B

**Fig. 2**

**Fig. 3**

**Europäisches Patentamt**
**European Patent Office**
**Office européen des brevets**

# EUROPEAN SEARCH REPORT

**Application Number**

EP 25 17 3761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/363959 A1 (BUSTAMANTE CIRIACO P [ES]) 25 November 2021 (2021-11-25) * paragraphs [0020] - [0022]; figures * | 1-14 | INV. F03B13/06 |
| X | CA 3 239 039 A1 (RHEENERGISE LTD [GB]) 8 June 2023 (2023-06-08) * page 4, line 27 - line 33 * * page 7, line 26 - line 35; figures * | 1-14 | |
| X | US 11 359 597 B2 (OLSON GAYLORD [US]) 14 June 2022 (2022-06-14) * column 5, line 18 - column 6, line 46; figure 2 * | 1-14 | |
| X | CN 115 506 940 A (CHINA ELECTRIC POWER RES INST CO LTD) 23 December 2022 (2022-12-23) * paragraphs [0035], [0039], [0070] - [0078]; figures * | 1-14 | |

| TECHNICAL FIELDS SEARCHED (IPC) |
|---|
| F03B |

The present search report has been drawn up for all claims

| Place of search | Date of completion of the search | Examiner |
|---|---|---|
| Munich | 18 September 2025 | Di Renzo, Raffaele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 644 688 A1

### ANNEX TO THE EUROPEAN SEARCH REPORT
### ON EUROPEAN PATENT APPLICATION NO.

EP 25 17 3761

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2025

| Patent document cited in search report | | Publication date | Patent family member(s) | | Publication date |
|---|---|---|---|---|---|
| US 2021363959 | A1 | 25-11-2021 | AU | 2019254045 A1 | 03-12-2020 |
| | | | CN | 112119213 A | 22-12-2020 |
| | | | EP | 3768967 A1 | 27-01-2021 |
| | | | ES | 2989873 T3 | 28-11-2024 |
| | | | JP | 7421814 B2 | 25-01-2024 |
| | | | JP | 2021522447 A | 30-08-2021 |
| | | | KR | 20210008842 A | 25-01-2021 |
| | | | PL | 3768967 T3 | 23-12-2024 |
| | | | SG | 11202010032V A | 27-11-2020 |
| | | | US | 2021363959 A1 | 25-11-2021 |
| | | | WO | 2019202456 A1 | 24-10-2019 |
| CA 3239039 | A1 | 08-06-2023 | CA | 3239039 A1 | 08-06-2023 |
| | | | EP | 4441363 A1 | 09-10-2024 |
| | | | GB | 2600262 A | 27-04-2022 |
| | | | US | 2025027472 A1 | 23-01-2025 |
| | | | WO | 2023100093 A1 | 08-06-2023 |
| US 11359597 | B2 | 14-06-2022 | NONE | | |
| CN 115506940 | A | 23-12-2022 | NONE | | |

EPO FORM P0459

For more details about this annex : see Official Journal of the European Patent Office, No. 12/82

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6444601 B
- US 6130179 A